# FASCICULE DE BREVET EUROPEEN

(11) **EP 2 675 658 B1**
(45) Date de publication et mention de la délivrance du brevet: **09.09.2015**
(21) Numéro de dépôt: 12707823.6
(22) Date de dépôt: 17.01.2012
(51) Int. Cl.: B60Q 1/26, B62D 65/16

(54) **DISPOSITIF DE POSITIONNEMENT RELATIF D'UNE PEAU DE PARE-CHOCS ET D'UN BOITIER DE FEU.**
VORRICHTUNG ZUR RELATIVEN POSITIONIERUNG EINER STOSSSTANGENVERKLEIDUNG UND EINES LEUCHTENGEHÄUSES
DEVICE FOR THE RELATIVE POSITIONING OF A BUMPER SKIN AND A LIGHT HOUSING

(30) Priorité: 15.02.2011 FR 1151224
(43) Date de publication de la demande: 25.12.2013
(73) Titulaire: Peugeot Citroën Automobiles SA, 78140 Vélizy Villacoublay (FR)
(72) Inventeur: CHARPENTIER, Hervé, F-25230 Dasle (FR)
(86) Numéro de dépôt international: PCT/FR2012/050095
(87) Numéro de publication internationale: WO 2012/110721

(56) Documents cités:
- DE-A1- 3 426 711
- FR-A1- 2 852 285
- FR-A1- 2 943 307

## Description

L'invention a trait au montage des pare-chocs et des feux des véhicules automobiles. Le document DE 34 26 711 A1 décrit un dispositif selon le préambule de la revendication 1.

Un pare-chocs comprend classiquement un absorbeur d'énergie, par exemple sous forme d'un bloc de mousse de polyéthylène basse densité (PEBD) ou de polyuréthane, et un ou plusieurs panneaux de finition en matière plastique semi-rigide, appelés peaux, qui viennent recouvrir l'absorbeur.

Une peau de pare-chocs n'intègre généralement pas de fonction d'éclairage du véhicule. Cette fonction est assurée par les feux, munis de boîtiers aux formes géométriques souvent complexes, distincts des peaux.

Pour éviter qu'un choc ne se transmette aux feux, ces derniers sont indépendants des peaux de pare-chocs, c'est-à-dire qu'il n'existe pas de fixation directe des feux sur les peaux de pare-chocs, ou réciproquement. En pratique, le montage des feux et des peaux de pare-chocs est effectué séparément, les feux étant d'ordinaire montés avant les peaux.

Or ce montage doit répondre à des contraintes fortes.

D'abord, pour des raisons esthétiques et aérodynamiques, les feux et les peaux de pare-chocs doivent être en bonne continuité surfacique, et les jeux entre leurs bords respectifs adjacents doivent, autant que possible, être constants et minimes.

Ensuite, les feux doivent être démontables sans qu'il soit nécessaire de déposer les peaux de pare-chocs, afin par exemple de remplacer une ampoule.

Des solutions ont été proposées par le passé pour tenter de satisfaire ces contraintes. Une solution connue, présentée notamment dans les demandes de brevet français FR 2 936 752 et FR 2 943 307 au nom de la demanderesse, consiste à interposer entre le feu et la carrosserie un support entre le feu et la peau de pare-chocs. Ce support est muni de moyens de fixation à la carrosserie et au feu, ainsi qu'à la peau de pare-choc.

Un tel support a l'avantage de permettre un positionnement mutuel précis du feu et de la peau de pare-chocs, mais il impose cependant une procédure de montage qui peut paraître quelque peu fastidieuse, en raison de la nécessité de fixer successivement plusieurs degrés de liberté du support par rapport au feu.

Il existe par conséquent un besoin de simplifier la procédure de montage des différents composants sans toutefois sacrifier l'objectif premier de précision de leur positionnement.

A cet effet, il est proposé, en premier lieu, un dispositif de positionnement relatif d'un support sous feu par rapport à un boîtier de feu d'un véhicule selon trois directions orthogonales deux à deux, qui comprend des moyens de fixation amovible du support au boîtier de feu incluant des moyens d'immobilisation relative du support sous feu et du boîtier de feu selon les trois directions orthogonales.

L'immobilisation simultanée selon les trois directions permet de simplifier - et de raccourcir - la procédure de montage.

Selon un mode de réalisation, les moyens de fixation comprennent deux parois en regard, qui forment des butées d'arrêt pour deux faces correspondantes prévues sur le boîtier de feu, selon une première et une deuxième directions orthogonales.

Les parois forment de préférence entre elles un angle dont la bissectrice s'étend suivant une direction décalée angulairement de la direction de montage du support sous feu sur l'élément de carrosserie.

L'angle entre ladite bissectrice et la direction de montage du support sous feu est par exemple compris entre 20° et 70°. Selon un mode de réalisation, cet angle est de 45° environ.

Les moyens de fixation peuvent également comprendre des moyens de retenue élastique du support sous feu par rapport au boîtier de feu. Ces moyens de retenue élastique se présentent par exemple sous forme d'au moins une patte flexible munie d'une dent apte à coopérer avec une encoche formée dans le boîtier de feu.

Les moyens de fixation peuvent en outre comprendre au moins un trou apte à recevoir un doigt d'indexation prévu sur le boîtier de feu pour immobiliser le support par rapport au boîtier selon une troisième direction, verticale. Selon un mode particulier de réalisation, les moyens de fixation comprennent une paire de trous aptes à recevoir chacun un doigt d'indexation prévu sur le boîtier de feu, l'un des trous étant oblong horizontalement.

Les moyens de fixation sont par exemple intégrés à un connecteur dont est muni le support sous feu, apte à coopérer avec un connecteur de forme complémentaire dont est muni le boîtier de feu.

Il est proposé, en deuxième lieu, un système de fixation d'un boîtier de feu sur un élément de carrosserie d'un véhicule automobile, comprenant un dispositif tel que décrit ci-dessus, et comprenant en outre des moyens de positionnement du support sous feu par rapport à l'élément de carrosserie, selon une première direction.

Le support sous feu peut également comprendre des moyens de positionnement d'une peau de pare-chocs.

Il est proposé, en troisième lieu, un véhicule automobile comprenant un dispositif de positionnement tel que décrit ci-dessus.

D'autres objets et avantages de l'invention apparaîtront à la lumière de la description faite ci-après en référence aux dessins annexés d'un exemple préféré de réalisation, dessins dans lesquels :
- la figure 1 est une vue en perspective éclatée montrant un élément de carrosserie, un support sous feu et, partiellement, un boîtier de feu ;
- la figure 2 est une vue en perspective des éléments de la figure 1, représentés suivant une autre direction d'observation ;
- les figures 3 et 4 sont des vues similaires à la figuré 1, illustrant le montage successif du support et du boîtier de feu sur l'élément de carrossérie ;
- la figure 5 est une vue en coupe horizontale du support sous feu et du boîtier de feu ;
- la figure 6 est une vue en perspective arrière d'un véhicule automobile.

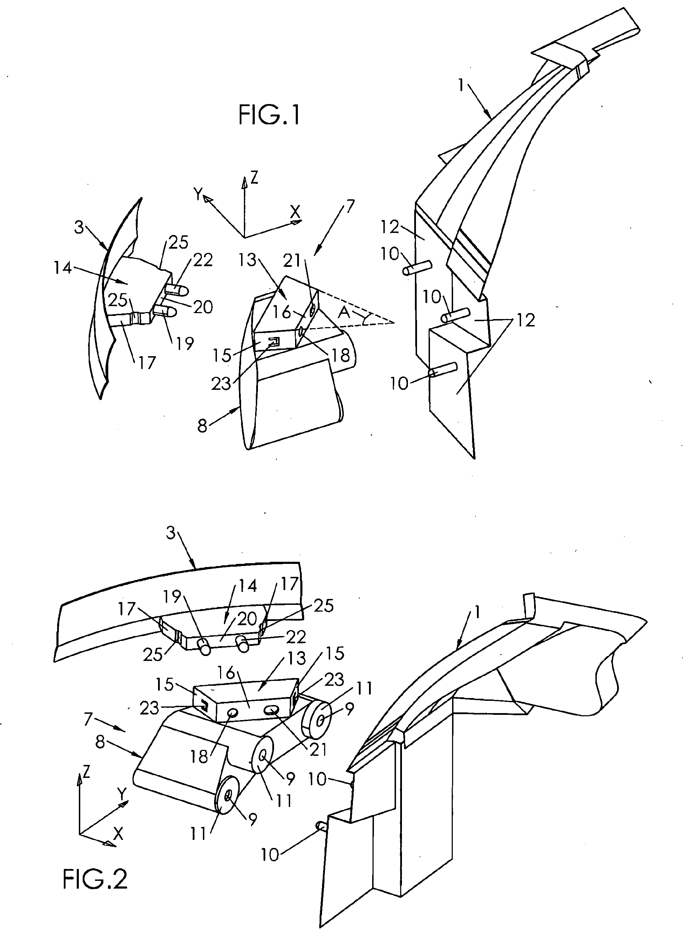

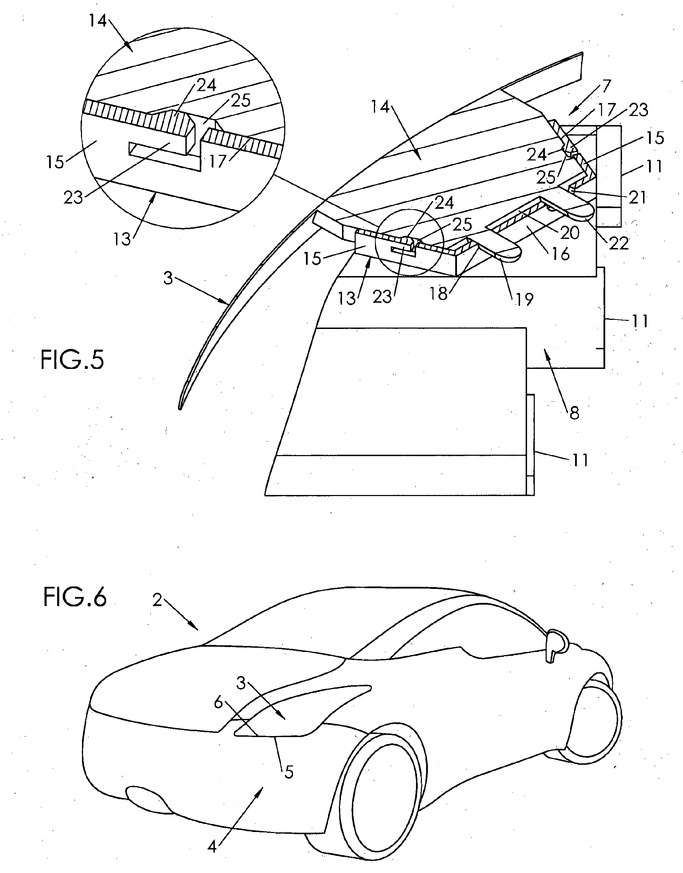

Sur la figure 1 est représenté un élément **1** de carrosserie d'un véhicule **2** automobile, en l'espèce un pied arrière, sur lequel est destiné à être monté un boîtier **3** de feu. Un véhicule **2** complet et fini est représenté sur la figure 6. Le véhicule **2** comprend une peau **4** de pare-chocs montée au voisinage du boîtier **3** de manière que leurs surfaces respectives soient affleurantes, et que leurs bords **5, 6** adjacents définissent entre eux un jeu aussi faible que possible.

A cet effet, le véhicule **2** est muni d'un dispositif **7** de positionnement mutuel de la peau **4 et** du boîtier **3** de feu selon trois directions orthogonales, à savoir :
- une direction longitudinale (axe X), parallèle à la direction générale de déplacement du véhicule **2**,
- une direction transversale (axe Y), perpendiculaire à la direction longitudinale et définissant avec elle un plan horizontal YX parallèle à un plan de roulement du véhicule **2**,
- une direction verticale (axe Z), perpendiculaire au plan horizontal XY.

Comme illustré sur les figures 1 à 5, ce dispositif **7** comprend un support **8** sous feu, qui forme une pièce d'interface assurant une liaison mécanique entre le boîtier **3** de feu et la peau **4** de pare-chocs.

Le support **8**, préférentiellement réalisé dans une matière plastique, est muni de moyens de positionnement sur l'élément de carrosserie selon l'axe X, sous forme par exemple de trous **9** aptes à venir s'emboîter sur des goujons **10** faisant saillie sur l'élément **1** de carrosserie. Afin de bénéficier de tolérances en Y et en Z au montage, les trous **9** sont d'un diamètre supérieur aux goujons **10**.

Selon un mode particulier de réalisation visible notamment sur les figures 1 et 2, le support **1** comprend trois trous ménagés dans des faces **11** d'appui parallèles, verticales (en l'espèce selon un plan YZ) mais non coplanaires, aptes à venir s'appliquer contre des faces **12** correspondantes définies sur l'élément **1** de carrosserie autour des goujons **10**.

Le support **8** est muni de moyens de fixation démontable du support **8** au boîtier **3** de feu. Ces moyens de fixation forment des moyens d'immobilisation relative du support **8** et du boîtier **3** de feu selon les trois axes X, Y et Z.

En pratique, le support 8 est équipé d'un connecteur 13, rapporté ou formé intégralement sur - ou dans - le support **8**, apte à coopérer avec un connecteur **14** de forme complémentaire dont est équipé le boîtier **3** de feu et qui inclut les moyens de fixation à celui-ci. Selon un mode préféré de réalisation illustré sur les figures, le connecteur **13** du support sous feu est du type mâle, c'est-à-dire qu'il forme un réceptacle apte à accueillir le connecteur **14** complémentaire du boîtier **3** de feu, lequel est du type mâle, c'est-à-dire qu'il est conformé en saillie. Mais cette configuration pourrait être inversée.

Le connecteur **13** femelle comprend deux parois **15** latérales en regard, et une paroi **16** de fond. Les parois **15** latérales ne sont pas parallèles entre elles mais forment un angle **A**, de préférence compris entre 30° et 90°. Dans l'exemple illustré, cet angle **A** est de 45° environ.

Selon un mode de réalisation correspondant à l'exemple illustré, la bissectrice de l'angle **A** s'étend suivant une direction **M** oblique, décalée angulairement de l'axe X. Comme nous le verrons, cette direction **M** oblique correspond à la direction de montage du boîtier **3** de feu sur l'élément **1** de carrosserie. L'angle **B** entre la direction **M** et l'axe X est de préférence compris entre 20° et 70°. Dans l'exemple illustré, cet angle **B** est de 45° environ.

Comme cela est illustré sur les figures 1 à 5, le connecteur **14** mâle comprend deux faces **17** extérieures qui définissent entre elles un angle identique à l'angle A entre les parois **15**, et qui, lors de l'introduction du connecteur **14** mâle dans le connecteur **13** femelle, viennent s'appliquer contre les parois **15** qui assurent ainsi des butées d'arrêt du boîtier **3** de feu dans sa direction M de montage (et donc conjointement et simultanément selon les axes X et Y).

La paroi **16** de fond, qui joint les parois **15** latérales, s'étend perpendiculairement à leur bissectrice.

La paroi **16** de fond est percée d'au moins un trou **18** apte à recevoir un doigt **19** d'indexation prévu en saillie sur une face **20** d'extrémité du connecteur mâle. De préférence, comme illustré sur les figures 2 et 5, la paroi **16** de fond comprend deux trous **18, 21**, aptes à recevoir chacun un doigt d'indexation, à savoir :
- un premier trou **18** de contour circulaire et d'un diamètre intérieur calibré correspondant (avec un jeu négligeable) à un diamètre extérieur du doigt **19** correspondant,
- un deuxième trou **21** de contour oblong horizontalement (c'est-à-dire que la direction d'élongation du trou **21** s'étend parallèlement au plan XY) et dont la hauteur, séparant deux bords, respectivement inférieur et supérieur du trou **21**, correspond, avec un jeu négligeable, au diamètre extérieur d'un doigt **22** correspondant. Selon un mode de réalisation illustré sur les figures, les deux doigts **19, 22** d'indexation présentent le même diamètre, et la hauteur du trou **21** oblong est par conséquent égale au diamètre du trou **18** circulaire.

Les trous **18, 21** forment ainsi des moyens d'immobilisation du support **8** sous feu par rapport au boîtier 3 de feu, suivant l'axe Z.

En outre, les moyens de fixation comprennent de préférence des moyens de retenue élastique du support **8** sous feu par rapport au boîtier **3** de feu, sous forme par exemple d'au moins une patte **23** flexible munie d'une dent **24** apte à coopérer avec une encoche **25** formée sur le boîtier **3** de feu. Dans l'exemple de réalisation illustré, le connecteur **13** femelle est muni d'une paire de pattes **23** formées chacune dans une paroi latérale **15**. Chaque patte **23** coopère, lorsque le connecteur **14** mâle est emboîté dans le connecteur **13** femelle, avec une encoche **25** formée dans chaque face **17** externe latérale du connecteur **14** mâle, ce qui assure une immobilisation totale des connecteurs **13, 14** l'un par rapport à l'autre, et donc du support **8** sous feu par rapport au boîtier **3** de feu.

Le montage est réalisé comme suit.

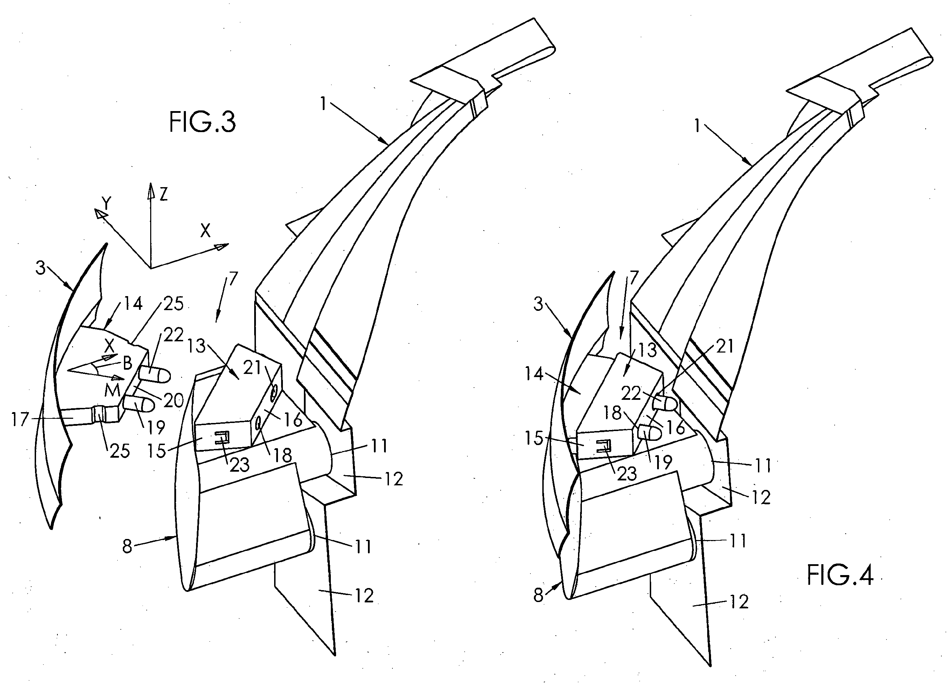

A partir de la position illustrée sur les figures 1 et 2, dans lesquels les composants **1, 3, 8** sont dissociés, on commence par positionner le support **8** sous feu sur l'élément **1** de carrosserie, en l'amenant selon l'axe X et en emboîtant, selon cet axe, les trous **9** sur les goujons **10** correspondants (figure 3). Dans cette position, le support **8** repose simplement sur les goujons **10**. Pouvant coulisser sur les goujons **10**, le support **8** bénéficie d'un degré de liberté en X, les faces **12** de l'élément de carrosserie formant toutefois des butées d'arrêt pour les faces **11** du support **8**, qui limitent la course de celui-ci vers l'avant. Grâce au diamètre des trous **9**, supérieur à celui des goujons **10**, le support **8** bénéficie également de degrés de liberté en Y et en Z, bien que ces degrés de liberté soient limités, selon la différence de diamètre prévue (par exemple de l'ordre de quelques millimètres).

On fixe ensuite, en l'amenant selon sa direction **M** oblique de montage, le boîtier **8** de feu sur l'élément **1** de carrosserie, en introduisant le connecteur **14** mâle dans le connecteur femelle **13**, jusqu'à encliquetage des dents **24** des pattes **23** flexibles dans les encoches **24** (figures 4 et 5).

L'introduction des doigts **19, 22** dans les trous **18, 21** assurent un premier indexage précis, selon l'axe Z, du support **8** sous feu par rapport au boîtier **3** de feu.

La coopération des faces **17** latérales du connecteur mâle **14** avec les parois **15** latérales du connecteur **13** femelle assure un second indexage précis, selon les axes conjoints X et Y, du support **8** sous feu par rapport au boîtier **3** de feu.

On voit que les indexages selon les trois axes X, Y et Z sont réalisés simultanément, d'un seul geste, par emboîtement du connecteur **14** mâle dans le connecteur **13** femelle. Il en résulte une simplification et une accélération du procédé de montage.

Le support **8** sous feu se trouve alors positionné, en étant immobilisé, de manière précise par rapport au boîtier **3** dé feu. La fixation définitive du support **8** sous feu à l'élément 1 de carrosserie peut alors être effectuée, par exemple au moyen de vis, de boulons ou encore d'agrafes. Selon mode particulier de réalisation, cette fixation définitive (qui contribue à la fixation du boîtier **3** de feu à l'élément 1 de carrosserie), peut être réalisée au moyen d'écrous vissés sur les goujons **10**.

La dernière étape consiste à monter la peau **4** de pare-chocs, une lèvre ou un ergot de celle-ci venant par exemple se fixer sur une partie de réception complémentaire formée à cet effet sur le support **8** sous feu. Compte tenu du positionnement précis du support **8** par rapport au boîtier **3** de feu, le positionnement de la peau **4** de pare-chocs par rapport à celui-ci est également précis.

Grâce aux pattes **23** élastiques, la fixation du support **8** sous feu au boîtier **3** de feu est réversible, et il suffit d'exercer sur celui-ci une traction suffisante pour le séparer du support **8** sous feu, par exemple pour remplacer une ampoule.

### NOMENCLATURE

- **1**: élément de carrosserie
- **2**: véhicule
- **3**: boîtier de feu
- **4**: peau de pare-chocs
- **5**: bord du feu
- **6**: bord de la peau
- **7**: dispositif de positionnement
- **8**: support sous feu
- **9**: trous de positionnement
- **10**: goujons
- **11**: faces d'appui
- **12**: faces sur l'élément de carrosserie
- **13**: connecteur femelle
- **14**: connecteur mâle
- **15**: paroilatérale
- **16**: paroi de fond
- **17**: faces externes sur le connecteur mâle
- **18**: trou circulaire
- **19**: doigt
- **20**: face d'extrémité du connecteur 14
- **21**: trou oblong
- **22**: doigt
- **23**: patte
- **24**: dent
- **25**: encoche

- **X**: axe longitudinal
- **Y**: axe transversal
- **Z**: axe vertical
- **A**: angle entre les parois 15
- **M**: direction de montage du boîtier 3
- **B**: angle M-X

## Revendications

1. Dispositif (**7**) de positionnement relatif d'un support (**8**) sous feu par rapport à un boîtier (**3**) de feu d'un véhicule selon trois directions (X, Y, Z) orthogonales deux à deux, comprenant des moyens de fixation amovible du support (**8**) au boîtier (**3**) de feu incluant des moyens d'immobilisation relative du support (**8**) sous feu et du boîtier (**3**) de feu selon les trois directions (X, Y, Z) orthogonales **caractérisé en ce que** lesdits moyens de fixation comprennent deux parois (**15**) en regard, qui forment des butées d'arrêt pour deux faces (**17**) prévues sur le boîtier (**3**) de feu, selon une première et une deuxième directions (X, Y) orthogonales.

2. Dispositif (**7**) selon la revendication 1, **caractérisé en ce que** les parois (**15**) forment entre elles un angle (A) dont la bissectrice s'étend suivant une direction (M) décalée angulairement de la direction (X) de montage du support (**8**) sous feu sur l'élément (**1**) de carrosserie.

3. Dispositif (**7**) selon la revendication 2, **caractérisé en ce que** l'angle (B) entre ladite bissectrice et la direction de montage du support (**8**) sous feu est compris entre 20° et 70°.

4. Dispositif (**7**) selon la revendication 3, **caractérisé en ce que** ledit angle (B) est de 45° environ.

5. Dispositif (**7**) selon l'une des revendications 1 à 4, **caractérisé en ce que** lesdits moyens de fixation comprennent des moyens (**23**) de retenue élastique du support (**8**) sous feu par rapport au boîtier (**3**) de feu.

6. Dispositif (**7**) selon la revendication 5, **caractérisé en ce que** les moyens (**23**) de retenue élastique se présentent sous forme d'au moins une patte (**23**) flexible munie d'une dent (**24**) apte à coopérer avec une encoche (**25**) formée dans le boîtier (**3**) de feu.

7. Dispositif (**7**) selon l'une des revendications 1 à 6, **caractérisé en ce que** lesdits moyens de fixation comprennent un trou (**18**) apte à recevoir un doigt (**19**) d'indexation prévu sur le boîtier (**3**) de feu pour immobiliser le support (**8**) par rapport au boîtier (**3**) selon une troisième direction (Z), verticale.

8. Dispositif (**7**) selon la revendication 7, **caractérisé en ce que** les moyens de fixation comprennent une paire de trous (**18, 21**) aptes à recevoir chacun un doigt (**19**, **22**) d'indexation prévu sur le boîtier (**3**) de feu, l'un (**21**) des trous étant oblong horizontalement.

9. Dispositif (**7**) selon l'une des revendications 1 à 8, **caractérisé en ce que** lesdits moyens de fixation sont intégrés à un connecteur (**13**) dont est muni le support (**8**) sous feu, apte à coopérer avec un connecteur (**14**) de forme complémentaire dont est muni le boîtier (**3**) de feu.

10. Système de fixation d'un boîtier de feu sur un élément de carrosserie d'un véhicule automobile, comprenant un dispositif (**7**) selon l'une des revendications 1 à 9, et comprenant en outre des moyens (**9, 10**) de positionnement du support (**8**) sous feu par rapport à l'élément (**1**) de carrosserie, selon une première direction (X).

11. Système selon la revendication 10, dans lequel le support (**8**) sous feu comprend des moyens de positionnement d'une peau de parechocs.

12. Véhicule (**2**) automobile comprenant un élément de carrosserie, et dispositif (**7**) de positionnement selon l'une des revendications 1 à 9 ou un système de fixation selon la revendications 10 ou la revendication 11.

## Patentansprüche

1. Vorrichtung (7) zur relativen Positionierung eines Trägers (8) unter einer Leuchte in Bezug auf ein Leuchtengehäuse (3) eines Fahrzeugs entlang drei Richtungen (X, Y, Z), die zueinander orthogonal sind, die abnehmbare Befestigungsmittel des Trägers (8) an dem Leuchtengehäuse (3) umfasst, das Mittel zum relativen Stillstellen des Trägers (8) unter der Leuchte und des Leuchtengehäuses (3) entlang der drei orthogonalen Richtungen (X, Y, Z) aufweist, **dadurch gekennzeichnet, dass** die Befestigungsmittel zwei einander gegenüberliegende Wände (15) umfassen, die Stoppanschläge für zwei Seiten (17), die auf dem Leuchtengehäuse (3) vorgesehen sind, entlang einer ersten und einer zweiten orthogonalen Richtung (X, Y) bilden.

2. Vorrichtung (7) nach Anspruch 1, **dadurch gekennzeichnet, dass** die Wände (15) untereinander einen Winkel (A) bilden, dessen Mittellinie sich entlang einer Richtung (M) erstreckt, die winkelig von der Montagerichtung (X) des Trägers (8) unter der Leuchte auf dem Karosserieelement (1) versetzt ist.

3. Vorrichtung (7) nach Anspruch 2, **dadurch gekennzeichnet, dass** der Winkel (B) zwischen der Mittellinie und der Montagerichtung des Trägers (8) unter der Leuchte zwischen 20° und 70° liegt.

4. Vorrichtung (7) noch Anspruch 3, **dadurch gekennzeichnet, dass** der Winkel (B) etwa 45° beträgt.

5. Vorrichtung (7) nach einem der Ansprüche 1 bis 4, **dadurch gekennzeichnet, dass** die Befestigungsmittel Mittel (23) zum federnden Zurückhalten des Trägers (8) unter der Leuchte in Bezug auf das Leuchtengehäuse (3) umfassen.

6. Vorrichtung (7) noch Anspruch 5, **dadurch gekennzeichnet, dass** die Mittel (23) zum federnden Zurückhalten die Form mindestens einer biegsamen Pratze (23) haben, die mit einem Zahn (24) versehen ist, der geeignet ist, mit einer Kerbe (25) die in dem Leuchtengehäuse (3) ausgebildet ist, zusammenzuwirken.

7. Vorrichtung (7) nach einem der Ansprüche 1 bis 6, **dadurch gekennzeichnet, dass** die Befestigungsmittel eine Bohrung (18) umfassen, die geeignet ist, einen Positionierungsfinger (19) aufzunehmen, der auf dem Leuchtengehäuse (3) vorgesehen ist, um den Träger (8) in Bezug auf das Gehäuse (3) entlang einer vertikalen dritten Richtung (Z) stillzustellen.

8. Vorrichtung (7) nach Anspruch 7, **dadurch gekennzeichnet, dass** die Befestigungsmittel ein Paar Bohrungen (18, 21) umfassen, die geeignet sind, jeweils einen Positionierungsfinger (19, 22) aufzunehmen, der auf dem Leuchtengehäuse (3) vorgesehen ist, wobei eine der Bohrungen (21 horizontal länglich ist.

9. Vorrichtung (7) nach einem der Ansprüche 1 bis 8, **dadurch gekennzeichnet, dass** die Befestigungsmittel in einen Steckverbinder (13), mit dem der Träger (8) unter der Leuchte verbunden ist, eingebaut sind, der geeignet ist, mit einem Steckverbinder (14) mit komplementärer Form, mit dem das Leuchtengehäuse (3) versehen ist, zusammenzuwirken.

10. Befestigungssystem eines Leuchtengehäuses auf einem Karosserieelement eines Kraftfahrzeugs, das eine Vorrichtung (7) nach einem der Ansprüche 1 bis 9 umfasst und außerdem Mittel (9, 10) zum Positionieren des Trägers (8) unter der Leuchte in Bezug auf das Karosserieelement (1) entlang einer ersten Richtung (X) umfasst.

11. System nach Anspruch 10, bei dem der Träger (8) unter der Leuchte Positionierungsmittel einer Stoßfängerverkleidung umfasst.

12. Kraftfahrzeug (2), das ein Karosserieelement und eine Positionierungsvorrichtung (7) nach einem der Ansprüche 1 bis 9 oder ein Befestigungssystem nach Anspruch 10 oder Anspruch 11 umfasst.

## Claims

1. A device (7) for the relative positioning of a mounting (8) beneath a light relative to a light housing (3) of a vehicle in three orthogonal directions (X, Y, Z), in two of said directions at a time, including means for removably attaching the mounting (8) to the light housing (3), including a means for relatively immobilizing the mounting (8) beneath the light and the light housing (3) in the three orthogonal directions (X, Y, Z), **characterized in that** the said attaching means include two opposite walls (15), which form stops for two faces (17) provided on the light housing (3), along a first and a second orthogonal direction (X, Y).

2. The device (7) according to Claim 1, **characterized in that** the walls (15) form between them an angle (A), the bisector of which extends along a direction (M) staggered angularly with respect to the mounting direction (X) of the support (8) beneath the light on the bodywork element (1).

3. The device (7) according to Claim 2, **characterized in that** the angle (B) between said bisector and the mounting direction of the support (8) beneath the light is comprised between 20° and 70°.

4. The device (7) according to Claim 3, **characterized in that** said angle (B) is approximately 45°.

5. The device (7) according to one of Claims 1 to 4, **characterized in that** said attaching means include means (23) for elastic retention of the support (8) beneath the light with respect to the light housing (3).

6. The device (7) according to Claim 5, **characterized in that** the means (23) for elastic retention are present in the form of at least one flexible lug (23) provided with a tooth (24) able to cooperate with a notch (25) formed in the light housing (3).

7. The device (7) according to one of Claims 1 to 6, **characterized in that** said attaching means include a hole (18) able to receive an indexing finger (19) provided on the light housing (3) to immobilize the support (8) with respect to the housing (3) along a third, vertical, direction (Z).

8. The device (7) according to Claim 7, **characterized in that** the attaching means include a pair of holes (18, 21) able to each receive an indexing finger (19, 22) provided on the light housing (3), one (21) of the holes being oblong horizontally.

9. The device (7) according to one of Claims 1 to 8, **characterized in that** said attaching means are integrated to a connector (13), with which the support (8) beneath the light is provided, able to cooperate with a connector (14) of complementary shape, with which the light housing (3) is provided.

10. A system for attaching a light housing on a bodywork element of a motor vehicle, including a device (7) according to one of Claims 1 to 9, and further including means (9, 10) for positioning the support (8) beneath the light with respect to the bodywork element (1), along a first direction (X).

11. The system according to Claim 10, in which the support (8) beneath the light includes means for the positioning of a bumper skin.

12. A motor vehicle (2) including a bodywork element, and a positioning device (7) according to one of Claims 1 to 9 or an attaching system according to Claim 10 or Claim 11.
